# EUROPÄISCHE PATENTSCHRIFT

(11) **EP 1 995 564 B1**
(45) Veröffentlichungstag und Bekanntmachung des Hinweises auf die Patenterteilung: **03.08.2016**
(21) Anmeldenummer: 08009162.2
(22) Anmeldetag: 17.05.2008
(51) Int. Cl.: G01C 21/36

(54) **Verfahren und Vorrichtung zur adaptiven Zielermittlung bei Navigationssystemen**
Method and device for adaptive target acquisition for navigation systems
Procédé et dispositif de calcul de cible adaptatif pour systèmes de navigation

(30) Priorität: 22.05.2007 DE 102007024061
(43) Veröffentlichungstag der Anmeldung: 26.11.2008
(73) Patentinhaber: Deutsche Telekom AG, 53113 Bonn (DE)
(72) Erfinder: Mäthner, Nils, Dr., 53125 Bonn (DE); Casott, Norbert, Dr., 50968 Köln (DE)
(74) Vertreter: 2K Patentanwälte Blasberg Kewitz & Reichel

(56) Entgegenhaltungen:
- EP-A- 1 162 560
- EP-A2- 0 638 887
- DE-A1- 19 839 378
- US-A1- 2005 027 442
- US-A1- 2005 125 148

## Beschreibung

Die Erfindung betrifft ein Verfahren und eine Vorrichtung zur Navigation und insbesondere ein Verfahren und eine Vorrichtung zur vereinfachten Bereitstellung von Zielangaben für ein Navigationsgerät.

### Gebiet der Erfindung:

Navigationssysteme sind heute weit verbreitet, um den Autofahrer komfortabel und stressarm an sein gewünschtes Ziel zu leiten. Bekannter Stand der Technik sind dabei solche Systeme, bei denen der Nutzer sein gewünschtes Ziel entweder direkt im Navigationsmenü eingibt oder eine Adresse aus einer externen Quelle, z.B. einer Kontakt-Datenbank, übernimmt oder von einem externen Assistenten, z.B. einem Call Center Agent, in das Navigationssystem senden lässt. Bei den Navigationsgeräten handelt es sich oftmals um mobile Geräte, wie z.B. PDAs (Personal Digital Assistants) oder mobile Telefone. Es kann sich aber auch um festeingebaute Navigationsgeräte handeln, die über Schnittstellen zu anderen Systemen verfügen, so dass Adressen und Termine übergeben werden können.

All diesen Lösungen ist gemeinsam, dass der Nutzer aktiv werden und einen zumindest subjektiv hohen Aufwand betreiben muss, um das System vor Fahrtantritt in Betrieb zu setzen. Aus diesem Grund bleibt die Mehrzahl der installierten Navigationsgeräte auf vielen Fahrten ausgeschaltet, wenn der Nutzer es als mühevoller empfindet, das Ziel einzugeben als den Weg selbst zu finden.

Die EP 1162 560 A2 und US 2005/0027442 beschreiben einen elektronischen Terminplaner mit einem Kalendarium, in welchem Termine mindestens nach Datum, Uhrzeit und einer Individualbezeichnung, zum Beispiel einer zu besuchenden Person, einstellbar sind, die über eine Schnittstelle mit einem Navigationssystem zur schnellen Zieleingabe austauschbar sind.

Die DE 198 39 378 und US 2005/0125148 offenbaren eine Navigationsvorrichtung mit einer automatisierten Fahrtzieleingabe vorgeschlagen. Das Mobilitätsverhalten des Benutzers wird anhand verschiedener Merkmale aufgezeichnet und aus diesen Daten typische Bewegungsprofile extrahiert und den Fahrtzielen nebst zugehörigen Fahrtrouten zugeordnet.

Die EP 0638 887 A2 zeigt ein Verfahren bei dem ein Benutzer zusätzlich zum Ziel den Zeitpunkt der Zielankunft eingeben kann. Sollten das Ziel nicht im Zeitfenster erreichbar sein, so werden Bahninformationen angezeigt.

Überblick über die Erfindung:
Genau hier setzt die Erfindung an, deren Aufgabe es ist, dem Nutzer die Mehrzahl der bisher manuell erforderlichen Zieleingaben mittels eines adaptiven Systemverhaltens abzunehmen.

Gelöst wird diese Aufgabe durch eine Erfindung mit den Merkmalen der unabhängigen Ansprüche.

Im Wesentlichen lernt das System aus dem Verhalten des Nutzers aus der Vergangenheit oder seinem geplanten Verhalten für die Zukunft. Aufgrund der Vielzahl von Daten, die ein Benutzer in seinen mobilen Geräten mit sich trägt, kann das Navigationsgerät bzw. die Software Abschätzungen für die Zukunft treffen. So kann eine Suche in den Terminen bereits einen Aufschluss über das zukünftige Verhalten geben. Steht ihm Terminkalender ein Termin an, der ggfs. mit einer Adresse versehen ist, oder einen Verweis auf eine Adresse aufweist, so wird diese Adresse vom Navigationsgerät vorgeschlagen. Sollte es sich um ein festeingebautes Navigationssystem handeln, so kann ein Abgleich der Daten z.B. über Bluetooth oder USB oder ähnlichem erfolgen. Hierbei können entweder die gesamten Tagesdaten vom mobilen Gerät (PDA, Smartphone oder mobilen Telefon) durch eine Synchronisation (Active-Sync oder ML-Sync) übertragen werden, damit das Navigationssystem dann die Auswahl vornimmt und ggfs. noch die Adressdaten anfordert, die fehlen, oder es gibt eine Clientsoftware, die auf dem mobilen Gerät bereits die Termindaten aufbereitet und diese zeitlich aufgereiht dem Navigationssystem übergibt.

Bei integrierten Lösungen, bei denen die Navigationssoftware bereits auf dem mobilen Gerät installiert ist, kann diese Suche auf den internen Datenbeständen erfolgen.

Zusätzlich lernt das System aus dem beobachteten Verhalten des Nutzers und passt sich diesem selbstständig an.

Ein Navigations- Kernel liefert über eine Schnittstelle automatisch Daten über das beobachtete Nutzerverhalten (z.B. eingegebene Ziele und anderweitig aufgesuchte Orte mit Zeitstempel) an das Modul User Behaviour Log. Bei dem Zeitstempel wird natürlich auch der Wochentag in Betracht gezogen. Wenn es sich um einen Werktag handelt, so wird für diesen ein anderes Nutzerverhalten erwartet, als an einem Wochenende oder einem Feiertag. Wenn das System aktiviert wird (z.B. automatisch durch Einschalten der Zündung), erstellt ein Rule Processor durch Auswertung der verfügbaren Datenquellen des External User Behaviour Date Stores und des User Behaviour Log eine Liste aktueller Zielvorschläge, die nach Trefferwährscheinlichkeit sortiert ist. Durch Auswahl aus der Liste kann der Nutzer den Navigations Kernel für die gewünschte Route starten.

In die Liste fließen ebenfalls die Zielerwartungen, die auf der Basis des Terminkalenders bestimmt wurden, ein. Die Sortierung kann dabei zielzeitabhängig getroffen werden. D.h. es wird im Zweifelsfall das Ziel als erstes angezeigt, das zeitlich noch erreichbar ist, ohne dass große Wartezeiten vor Ort anfallen. Hierbei wird die Ankunftszeit berechnet. Sollte ein Termin in größerer Entfernung im Kalender aufgeführt sein, z.B. ab 150 km Entfernung, so werden zusätzlich die größeren Flughäfen und Bahnstationen als mögliche Auswahl für den Benutzer aufgeführt. Auch können diese angezeigt werden, wenn eine Anreise zeitlich mit dem Auto nicht mehr möglich ist.

Das Regelwerk für die Auswahl der Zielfavoriten kann zielgruppenspezifisch (Privatfahrzeug vs. Dienstwagen vs. Flottenfahrzeug etc.) und in Abhängigkeit von den verfügbaren Datenquellen ausgeführt werden. Einige mögliche Regeln für die Zielfindung mögen dies beispielhaft illustrieren:
Wähle den Ort des nächsten Termins im Kalender, wenn die verbleibende Zeit bis zum Beginn etwa der erwarteten Fahrzeit entspricht.

Schlage den nächsten Flughafen oder Bahnhof vor, wenn der Termin per Auto nicht mehr erreichbar ist, oder wenn die Distanz größer als 200 km ist.

Wenn der Fahrer zur aktuellen Zeit am gegebenen Wochentag früher ein bestimmtes Ziel mehrfach angesteuert hat, so schlage dieses vor (z.B. montags zwischen 8:00h und 9:00h ins Büro oder samstags zwischen 9:00h und 11:00h ins Einkaufszentrum).

Auch ist es denkbar, zu Zielen zu fahren, an denen eine Person verweilt, die einen Geburtstag hat.

Ferner ist es denkbar, dass sich das Navigationssystem über ein Netzwerk in einen Messaging/Collaboration Server einwählt. Hierbei hat das Navigationssystem eine Schnittstelle zu dem Messaging/Collaboration (MS-Exchange oder Lotus Notes oder andere Systeme) und kann die Adressdaten und den Terminkalender aus dem Netzwerk (vorzugsweise Internet) herunterladen, so dass die Daten immer aktuell sind. Diese Funktion kann ein Pushdienst sein, wie bei einem Blackberry oder einem Microsoft Handy (PDA, Smartphone). Hierbei sind die Passwörter für den Benutzeraccount vorzugsweise in einer Keycard oder Signaturkarte hinterlegt, die vom Fahrzeug eingelesen wird. Alternativ können die Informationen auch verschlüsselt auf dem Navigationsgerät abgelegt sein und durch einen mehrstelligen Pin wieder freigegeben werden.

Es ist ebenfalls denkbar, dass ein Proxy zwischengeschaltet ist. Hierbei werden die Daten von einem zentralen Server verwaltet, der zwischen das Navigationssystem und den Messaging/Collaboration Server geschaltet ist und die Berechnung der Vorschlagsziele erfolgt durch diesen Server. Der Server hat das Regelwerk hinterlegt, und erlangt vom Fahrzeug regelmäßig die in der Vergangenheit durchgeführten Fahrten. Somit kann das Regelwerk komplett ausgelagert werden und komplexere Verfahren zur Berechnung möglicher Ziele angewendet werden. Die ermittelten Ziele werden dann an das mobile Endgerät übermittelt. Hierbei können z.B. lediglich die Zielkoordinaten mit einer kurzen Bezeichnung übermittelt werden, so dass die Adressermittlung auf dem Navigationssystem keine Mehrdeutigkeiten aufweisen kann. Auch können ganze Fahrtrouten übertragen werden. Dieser Ansatz kann ferner für eine onboard wie offboard Navigation genutzt werden.

### Figurenbeschreibung:

Im Folgenden eine kurze Beschreibung der Figuren:

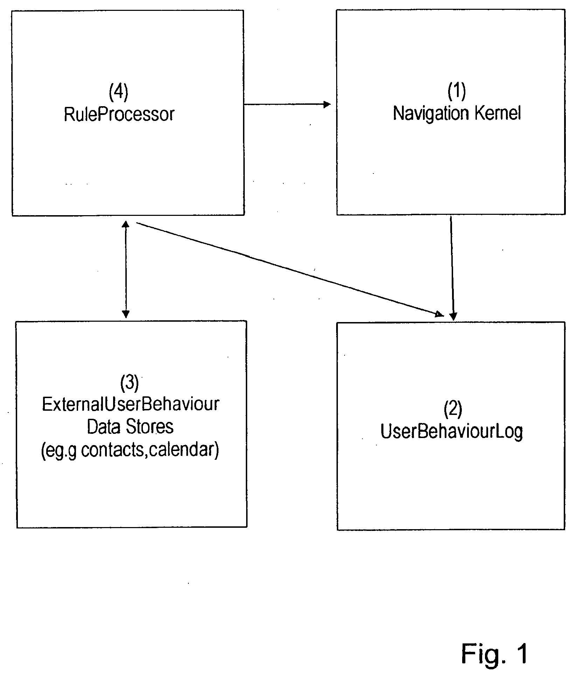

Figur 1 zeigt den schematischen Aufbau der erfindungsgemäßen Vorrichtung

### Ausführungsformen:

Die erfindungsgemäße Vorrichtung ist der Fig. 1 zu entnehmen. Der Navigation Kernel 1 liefert über eine Schnittstelle automatisch Daten über das beobachtete Nutzerverhalten (z.B. eingegebene Ziele und anderweitig aufgesuchte Orte mit Zeitstempel) an das Modul User Behaviour Log 2. Wenn das System aktiviert wird (z.B. automatisch durch Einschalten der Zündung), erstellt der Rule Processor 4 durch Auswertung der verfügbaren Datenquellen der externe User Behaviour Date Stores 3 und des User Behaviour Log 2 eine Liste aktueller Zielvorschläge, die nach Trefferwahrscheinlichkeit sortiert ist. Durch Auswahl aus der Liste kann der Nutzer den Navigation Kernel 1 für die gewünschte Route starten.

Das Regelwerk für die Auswahl der Zielfavoriten kann zielgruppenspezifisch (Privatfahrzeug vs. Dienstwagen vs. Flottenfahrzeug etc.) und in Abhängigkeit von den verfügbaren Datenquellen ausgeführt werden.

Es wird darauf hingewiesen, dass Teile der Erfindung Software sein können, die in Verbindung mit der Hardware die Funktion der vorliegenden Erfindung ergeben.

Ferner soll das Ausführungsbeispiel nicht beschränkend interpretiert werden. Die Erfindung soll dem breitesten Schutz zugänglich sein, den der Wortlaut der Ansprüche definiert.

## Patentansprüche

1. Verfahren zum Vorschlagen von Zielen für ein Navigationssystem, die durch einen Benutzer auswählbar sind,
umfassend:
- Auslesen eines Terminkalenders aus einer Datenbank, Bestimmen von örtlichen Zielen anhand von Termineinträge im Terminkalender und Vorschlagen möglicher Ziele,
**dadurch gekennzeichnet, dass**
für ein örtliches Ziel eines Termineintrages, der im Terminkalender aufgeführt ist, in größerer Entfernung, nämlich für einen Termineintrag bei dem eine Entfernung zum örtlichen Ziel mehr als 150km überschreitet, zusätzlich größere Flughäfen und Bahnstationen als mögliche Vorschläge für Ziele für den Benutzer aufgeführt werden.

2. Das Verfahren nach dem vorhergehenden Anspruch, wobei das Vorschlagen der möglichen Ziele automatisch beim Start des Navigationssystems und/oder des Fahrzeuges erfolgt.

3. Das Verfahren nach einem oder mehreren der vorhergehenden Ansprüche, wobei ein digitales Aufzeichnen eines beobachteten früheren zeitlichen und örtlichen Verhaltens des Benutzers lokal im Navigationssystems oder in einer externen Einrichtung erfolgt und basierend auf dem Verhalten in der Vergangenheit und der aktuellen Uhrzeit erfolgt ein Vorschlagen möglicher Ziele.

4. Das Verfahren nach einem oder mehreren der vorhergehenden Ansprüche, wobei die Vorschläge für Ziele mit einem Regelwerk bestimmt werden, das statisch oder dynamisch veränderlich ist.

5. Das Verfahren nach dem vorhergehenden Anspruch, wobei das Regelwerk
einen Typ der Fahrzeugnutzung, insbesondere privat, geschäftlich, Flottenfahrzeug, Mietwagen, und/oder eine Uhrzeit und/oder ein Datum und/oder Kalendereinträge und/oder eine Fahrzeit zum Ziel und/oder eine Entfernung zum Ziel und/oder eine Häufigkeit eines angefahrenen Ziels mit einbezieht.

6. Das Verfahren nach einem oder mehreren der vorhergehenden Ansprüche, wobei die Termineinträge und vorzugsweise auch Adressdaten von einem PDA, einem Smartphone, einem Laptop oder einem mobilen Telefon erlangt werden, und vorzugsweise drahtlos per Bluetooth übertragen werden, falls die Navigation nicht auf dem PDA, einem Smartphone, einem Laptop oder einem mobilen Telefon selber durchgeführt wird.

7. Das Verfahren nach dem vorhergehenden Anspruch, wobei das Navigationssystem über ein drahtloses Netzwerk automatisch von einem Messaging/Collaboration Server Termineinträge, und vorzugsweise auch die Adressdaten, erhält, die in die Zielauswahl einfließen.

8. Das Verfahren nach dem vorhergehenden Anspruch, wobei sich das Navigationssystem direkt über eine Schnittstelle zu dem Messaging/Collaboration System die Adressdaten selbstständig oder durch einen Push-Dienst herunterholt und die Berechnungen für die Ziel selbstständig vornimmt.

9. Das Verfahren nach Anspruch 4 und 7, wobei ein Proxy-System zwischen geschaltet ist, das die Termineinträge und vorzugsweise Adressdaten vom Messaging/Collaboration System herunterlädt, wobei auf dem Proxy-System das Regelwerk hinterlegt ist, und vom Fahrzeug über ein Netzwerk regelmäßig die in der Vergangenheit durchgeführten Fahrten erlangt werden, um dann die Ziele durch den Proxy zu bestimmen, und die Zielvorschläge an das Navigationssystem zu senden.

10. Navigationssystem, bei dem einem Benutzer Ziele automatisch auf der Basis eines Regelwerks vorgeschlagen werden, die dann durch den Benutzer auswählbar sind, umfassend folgende Mittel:
- Mittel zum Auslesen eines Terminkalenders aus einer Datenbank, Bestimmen von örtlichen Zielen anhand von Termineinträge im Terminkalender und Vorschlagen möglicher Ziele;
**gekennzeichnet durch**
Mittel zum Erkennen, ob ein örtliches Zieles eines Termineintrages im Terminkalender in größerer Entfernung aufgeführt ist, nämlich bei dem die Entfernung mehr als 150km überschreitet, und um in dem Fall zusätzlich größere Flughäfen und Bahnstationen als mögliche Vorschläge für Ziele für den Benutzer aufzuführen.

11. Das Navigationssystem nach dem vorhergehenden Anspruch, wobei das Vorschlagen der möglichen Ziele automatisch beim Start des Navigationssystems und/oder des Fahrzeuges erfolgt.

12. Das Navigationssystem nach einem oder mehreren der vorhergehenden Navigationssystemansprüche, umfassend Mittel zum digitalen Aufzeichnen eines beobachteten früheren zeitlichen und örtlichen Verhaltens des Benutzers lokal im Gerät oder in einer externen Einrichtung und basierend auf dem Verhalten in der Vergangenheit und der aktuellen Uhrzeit Vorschlagen möglicher Ziele.

13. Das Navigationssystem nach einem oder mehreren der vorhergehenden Navigationssystemansprüche, wobei die Vorschläge für Ziele mit dem Regelwerk bestimmt werden, das statisch oder dynamisch veränderlich ist.

14. Das Navigationssystem nach dem vorhergehenden Anspruch, wobei das Regelwerk
eine Typ der Fahrzeugnutzung, insbesondere privat, geschäftlich, Flottenfahrzeug, Mietwagen,
und/oder eine Uhrzeit und/oder ein Datum und/oder Kalendereinträge und/oder eine Fahrzeit zum Ziel und/oder eine Entfernung zum Ziel und/oder eine Häufigkeit eines angefahrenen Ziels mit einbezieht.

15. Das Navigationssystem nach einem oder mehreren der vorhergehenden Navigationssystemansprüche, wobei eine Schnittstelle so konfiguriert ist, dass die Termineinträge und vorzugsweise auch Adressdaten von einem PDA, einem Smartphone, einem Laptop oder einem mobilen Telefon erlangt werden, und vorzugsweise drahtlos per Bluetooth übertragen werden, falls das Navigationssystem nicht als ein PDA, ein Smartphone, ein Laptop oder ein mobiles Telefon selber ausgebildet ist.

16. Das Navigationssystem nach dem vorhergehenden Anspruch, wobei das Navigationssystem eine Netzwerkschnittstelle aufweist und so konfiguriert ist, dass das Navigationssystem über das drahtlose Netzwerk automatisch von einem Messaging/Collaboration Server die Termineinträge, und vorzugsweise auch die Adressdaten erhält, die in die Auswahl der Ziel einfließen.

17. Das Navigationssystem nach dem vorhergehenden Anspruch, wobei direkt über die Schnittstelle zu dem Messaging/Collaboration System die Adressdaten selbstständig durch einen Pulldienst oder durch einen Pushdienst herunterladbar sind und die Berechnungen für die Zielauswahl selbstständig vorgenehmbar ist.

18. Das Navigationssystem nach den vorhergehenden drei Ansprüchen, wobei Mittel vorhanden sind, um die Zugriffsdaten für das Messaging/Collaboration System verschlüsselt auf dem Navigationssystem abzulegen, oder ein Kartenleser vorhanden ist, um die Zugriffsdaten, die auf einer Keycard abgelegt sind, beim Starten des Navigationssystems zu laden.

19. Ein Proxy-System zum Vorschlagen von Zielen für ein Navigationssystem, die durch einen Benutzer auswählbar sind,
das zwischen dem Navigationssystem und einem Messaging/Collaboration System angeordnet ist, umfassend folgende Mittel:
- Mittel zum Auslesen des Terminkalenders aus einem Messaging/Collaboration System, Bestimmen von örtlichen Zielen anhand von Termineinträge in dem Terminkalender;
- ein Regelsystem zum Bestimmen von Zielvorschlägen auf der Basis des Terminkalenders und Mittel, um zu erkennen, ob ein örtliches Ziel eines Termineintrages in größerer Entfernung im Kalender aufgeführt ist, nämlich bei dem eine Entfernung zum örtlichen Ziel mehr als 150km überschreitet, um in diesem Fall zusätzlich die größeren Flughäfen und Bahnstationen als mögliche Auswahl für die Zielvorschläge für den Benutzer aufzuführen;
- Mittel zum Übertragen der Zielvorschläge an das Navigationssystem.

20. Das Proxy-System nach dem vorhergehenden Anspruch, wobei Zugriffsdaten für das Messaging/Collaboration System verschlüsselt abgelegt sind oder durch das Navigationssystem bereitgestellt werden, wobei diese vorzugsweise durch einen Kartenleser eingelesen werden.

## Claims

1. A method for recommending destinations for a navigation system which are selectable by a user, comprising:
- reading-out a timetable from a database, determining local destinations based on the entries in the timetable and recommending possible destinations,
**characterized in that**
for a local destination of an appointment which is listed in the timetable, in greater distance, namely of an appointment for which the distance exceeds more than 150km,
additionally major airports and train stations are listed as possible choices for destinations for the user.

2. The method according to the preceding claim, wherein the recommendation of the possible destinations is automatically carried out during the start of the navigation system and / or of the vehicle.

3. The method according to one or more of the preceding claims, wherein a digital recording of an earlier, temporal and local behavior of the user is locally stored in the navigation system or is sent to an external device via a network, and based on the behavior of the past and the current time a recommendation of possible destinations is done.

4. The method according to one or more of the preceding claims, wherein the recommendations of destinations are determined with a set of rules which are statically or dynamically changeable.

5. The method according to the preceding claim, wherein the set of rules
involves the type of use of vehicle, in particular personal, business, fleet vehicle, rental car,
and I or time and / or date and / or calendar events and / or the travel time to the destination and / or the distance to the destination and / or the frequency of the approached destination.

6. The method according to one or more of the preceding claims, wherein the calendar entries and preferably also the address data is obtained by a PDA, a smartphone, a laptop or a mobile phone, and is preferably wirelessly transmitted via Bluetooth, if the navigation is not performed on a PDA, a smart phone, a laptop or a mobile phone.

7. The method according to the preceding claim, wherein the navigation system automatically receives calendar entries and preferably also address data from a Messaging / Collaboration server, which are included in the destination selection.

8. The method according to the preceding claim, wherein the navigation system directly obtains the address data via an interface to the Messaging / Collaboration system in an independent manner or through a push service, and performs the calculations for the destination independently.

9. The method according to claim 7, wherein a proxy system that downloads the calendar entries and preferably also the address data from the messaging / collaboration system is interconnected, wherein a set of rules is stored on the proxy system, and the previous trips are regularly received from the vehicle via a network to determine the destinations by the proxy, and wherein the destination proposals are sent to the navigation system.

10. Navigation system in which destinations are automatically proposed to a user, based on a set of rules, which are then selectable for the user, comprising the following means:
- Means for reading a calendar from a database, determining local destinations based on the entries in the calendar and proposing possible destinations;
**characterized by**,
- Means for detecting whether a local destination of an entry in the calendar is listed in a greater distance, namely a distance exceeding more than 150km, and to additionally list major airports and railway stations as potential destinations for the user in this case.

11. The navigation system according to the preceding claim, wherein the proposal of possible destinations is automatically done when starting the navigation system and I or the vehicle.

12. The navigation system according to one or more of the preceding method claims, wherein the method comprises means to digitally record a previously obtained temporal or spatial behavior of the user either locally on the device or on an external device, and to recommend potential destinations based on the previous behavior and the present time.

13. The navigation system according to one or more of the preceding method claims, wherein the proposed navigation destinations are determined according to the set of rules that is static or dynamically changeable.

14. The navigation system according to the preceding claim, wherein the set of rules includes the type of vehicle use, in particular personal, business, fleet vehicle, rental car,
and / or time and / or date and / or calendar entries and / or the travel time to the destination and or the distance to the destination and / or the frequency of travelling to the approached destination.

15. The navigation system according to one or more of the preceding method claims, wherein an interface is configured such that the calendar entries and preferably also the address data is obtained from a PDA, a smartphone, a laptop or a mobile phone, and is preferably wirelessly transmitted via Bluetooth if the navigation system is not a PDA, a smartphone, a laptop or a mobile phone.

16. The navigation system according to the preceding claim, wherein the navigation system comprises a network interface and is configured to automatically receive the calendar entries and preferably also the address data that is included in the selection of potential destinations via the wireless network by a Messaging / Collaboration Server.

17. The navigation system according to the preceding claim, wherein the address data is automatically downloadable by a pull service or push service via the interface to the messaging / collaboration system and the calculations for the potential destination selection is executable.

18. The navigation system according to the preceding three claims, wherein means are provided to store the access data for the Messaging / Collaboration System in an encrypted form on the navigation system, or wherein a card reader is provided to load the access data stored on a key card, when starting the navigation system.

19. A proxy system for proposing destinations on a navigation system which are selectable by a user, wherein the proxy-system is located between the navigation system and a Messaging / Collaboration System,
comprising the following means:
- Means for reading the calendar of a messaging / collaboration system, determining local destinations based on the entries of the calendar;
- a control system for determining destination recommendations on the basis of the calendar and means to determine whether a local destination of an entry listed in the calendar is to be in greater distance, namely destinations for which the distance exceeds more than 150km,
and additionally for listing the major airports and railway stations as destination proposals in the selection for the user in this case;
- Means for transmitting the destination proposals to the navigation system.

20. The proxy system according to the preceding claim, wherein the access data for the messaging / collaboration system is stored in encrypted form, or is provided by the navigation system, wherein these data are preferably read-in by a card reader.

## Revendications

1. Un procédé de recommandations de destinations pour un système de navigation sélectionnable par un utilisateur, comprenant :
- la lecture d'un calendrier au sein d'une base de données, déterminant des destinations locales sur la base d'entrées au sein du calendrier et la recommandation de destinations potentielles,
**caractérisé en ce que** :
pour une destination locale d'un rendez-vous listé dans le calendrier, à une distance plus importante, à savoir un rendez vous pour une distance excédant 150 km, les principaux aéroports et gares ferroviaires sont en outre listés en tant que choix éventuels de destination pour l'utilisateur.

2. Le procédé selon la revendication précédente, dans lequel la recommandation des destinations est automatiquement réalisée durant le démarrage du système de navigation et/ou le véhicule.

3. Le procédé selon l'une ou plusieurs des revendications précédentes, dans lequel un enregistrement numérique d'un comportement antérieur, local et temporel, est stocké localement dans le système de navigation ou est transmis à un dispositif externe via un réseau, et sur la base du comportement antérieur et actuel, une recommandation concernant des destinations potentielles est présentée.

4. Le procédé selon l'une ou plusieurs des revendications précédentes, dans lequel les recommandations de destinations sont déterminées au moyen d'un jeu de règles qui sont modifiables statiquement ou dynamiquement.

5. Le procédé selon la revendication précédente, dans lequel le jeu de règles implique le type de véhicule, en particulier personnel, professionnel, véhicule de flotte, véhicule de location et/ou le temps et/ou la date et/ou des événements de calendrier et/ou le temps de trajet jusqu'à la destination et/ou la distance jusqu'à la destination et/ou la fréquence de la destination approchée.

6. Le procédé selon l'une ou plusieurs des revendications précédentes, dans lequel les entrées du calendrier, et de préférence également les données d'adresse sont obtenues d'un Assistant Portable PDA, un téléphone intelligent, un ordinateur portable ou un téléphone mobile, et transmises de préférence d'une manière non filaire par Bluetooth, lorsque la navigation n'est pas réalisée sur un Assistant Portable PDA, un téléphone intelligent, un ordinateur portable ou un téléphone mobile.

7. Le procédé selon la revendication précédente, dans lequel le système de navigation reçoit automatiquement des entrées de calendrier et de préférence également des données d'adresse depuis un serveur de Messages/Collaboration, qui sont insérées dans la destination de sélection.

8. Le procédé selon la revendication précédente, dans lequel le système de navigation obtient directement les données d'adresse via une interface vers le système de Messagerie/Collaboration d'une manière indépendante ou au travers un service de push, et effectue indépendamment les calcul de destination.

9. Le procédé selon la revendication 7, dans lequel est interconnecté un système proxy téléchargeant les entrées de calendrier et de préférence également les données d'adresse depuis le système de Messagerie/Collaboration, dans lequel un jeu de règles est stocké au sein du système proxy, et les voyages précédents sont régulièrement reçus du véhicule via un réseau pour déterminer les destinations par le proxy, et dans lequel les propositions de destination sont transmises au système de navigation.

10. Un système de navigation dans lequel les destinations sont automatiquement proposées à un utilisateur, sur la base d'un jeu de règles, sélectionnable par un utilisateur, comprenant les moyens suivants:
- des moyens de lecture d'un calendrier au sein d'une base de données, déterminant des destinations locales sur la base d'entrées au sein du calendrier et en proposant des destinations potentielles,
**caractérisé par** :
- des moyens de détection pour détecter qu'une destination locale d'une entrée dans le calendrier est listé à une distance plus importante, à savoir un rendez vous pour une distance excédant 150 km, dans le but de lister en outre les principaux aéroports et gares ferroviaires en tant que choix éventuels de destination pour l'utilisateur.

11. Le système de navigation selon la revendication précédente, dans lequel la recommandation des destinations est automatiquement réalisée durant le démarrage du système de navigation et/ou le véhicule.

12. Le système de navigation selon l'une ou plusieurs des revendications de procédé précédentes, dans lequel le procédé comporte des moyens pour enregistrer numériquement un comportement antérieur, spatial et temporel, de l'utilisateur soit localement au sein du dispositif ou dans un dispositif externe, et pour recommander des destinations potentielles sur la base du comportement antérieur et actuel.

13. Le système de navigation selon l'une ou plusieurs des revendications de procédé précédentes, dans lequel les recommandations de destinations sont déterminées au moyen d'un jeu de règles qui sont modifiables statiquement ou dynamiquement.

14. Le système de navigation selon la revendication précédente, dans lequel le jeu de règles implique le type de véhicule, en particulier personnel, professionnel, véhicule de flotte, véhicule de location et/ou le temps et/ou la date et/ou des événements de calendrier et/ou le temps de trajet jusqu'à la destination et/ou la distance jusqu'à la destination et/ou la fréquence de la destination approchée.

15. Le système de navigation selon l'une ou plusieurs des revendications de procédé précédentes, dans lequel une interface est configurée de façon à ce que les entrées du calendrier, et de préférence également les données d'adresse sont obtenues d'un Assistant Portable PDA, un téléphone intelligent, un ordinateur portable ou un téléphone mobile, et transmises de préférence d'une manière non filaire par Bluetooth, lorsque la navigation n'est pas réalisée sur un Assistant Portable PDA, un téléphone intelligent, un ordinateur portable ou un téléphone mobile.

16. Le système de navigation selon la revendication précédente, dans lequel le système de navigation comporte une interface réseau et est configuré pour recevoir automatiquement des entrées de calendrier et de préférence également des données d'adresse depuis un serveur de Messages/Collaboration, qui sont insérées dans la destination de sélection.

17. Le système de navigation selon la revendication précédente, dans lequel les données d'adresse sont directement téléchargeable par un service de pull ou un service de push via une interface vers le système de Messagerie/Collaboration et les calculs des destinations potentielles sont exécutés.

18. Le système de navigation selon les trois revendications précédentes, dans lequel des moyens sont fournis pour stocker les données d'adresse pour le Système de Messagerie/Collaboration dans une forme chiffrée sur le système de navigation, ou dans lequel un lecteur de carte est fourni pour charger les données d'adresse sur une carte cryptée, lors du démarrage du système de navigation.

19. Un système proxy pour proposer des destinations sur un système de navigation, sélectionnable par un utilisateur, dans lequel le système proxy est située entre le système de navigation et un système de Messagerie/Collaboration,
comprenant les moyens suivants:
- des moyens de lecture d'un calendrier au sein du système de messagerie/collaboration, déterminant des destinations locales sur la base d'entrées au sein du calendrier,
- un système de commande pour déterminer des recommandations de destination sur la base du calendrier et des moyens pour déterminer si une destination locale d'une entrée liste dans le calendrier est à une distance plus importante, à savoir des destinations pour lesquelles la distance est supérieure à 150 km,
et en outre pour lister les principaux aéroports et gares ferroviaires en tant que propositions de destinations dans la sélection de l'utilisateur dans ce cas ;
- des moyens pour transmettre les propositions de destinations au système de navigation.

20. Le système proxy selon la revendication précédente, dans lequel les données d'accès du système de messagerie/collaboration sont stockées dans une forme chiffrée, ou sont fournies par le système de navigation, dans lequel ces données sont lu de préférence au moyen d'un lecteur de carte.
